# EUROPÄISCHE PATENTANMELDUNG

(11) **EP 4 707 046 A1**
(43) Veröffentlichungstag der Anmeldung: **11.03.2026**
(21) Anmeldenummer: 25198200.5
(22) Anmeldetag: 26.08.2025
(51) Int. Cl.: B60L 53/16, H01R 13/52, H01R 13/66

(54) **LADESTECKER MIT KABELDURCHFÜHRUNG**

(30) Priorität: 03.09.2024 DE 102024125151
(71) Anmelder: Amphenol Tuchel Industrial GmbH, 74080 Heilbronn (DE)
(72) Erfinder: GÖRL, Ann-Kathrin, 74251 Lehrensteinsfeld (DE)
(74) Vertreter: Staeger & Sperling Partnerschaftsgesellschaft mbB

(57) **Zusammenfassung**

Die Erfindung betrifft einen Ladestecker mit Kontaktelementen zur lösbaren, elektrisch leitenden Verbindung eines batterieelektrischen Fahrzeugs mit einer Ladestation, aufweisend ein Ladesteckergehäuse mit wenigstens einer Kabeldurchführung, wobei wenigstens ein Sensor benachbart zu den Kontaktelementen und in Steckrichtung im vorderen Bereich des Ladesteckers angeordnet ist, wobei die Sensorkabel durch die Kabeldurchführung hindurchgeführt und mit wenigstens einem Dichtungselement gegenüber dem Ladesteckergehäuse abgedichtet sind.

## Beschreibung

Die Erfindung betrifft einen Ladestecker mit Kontaktelementen zur lösbaren, elektrisch leitenden Verbindung eines batterieelektrischen Fahrzeugs mit einer Ladestation, aufweisend ein Ladesteckergehäuse mit wenigstens einer Kabeldurchführung.

Kontakte im Allgemeinen weisen wenigstens einen elektrisch leitfähigen Kontaktabschnitt zum lösbaren, temporären oder steckenden Verbinden mit einem korrespondierenden Gegenkontaktelement und einen an den Kontaktabschnitt anschließenden Schaftabschnitt zum Befestigen einer elektrischen Leitung an dem Kontakt auf. Ein solcher Kontakt, Steckkontakt, Hochstromkontakt kann an einem Ladestecker oder einer Ladebuchse beispielsweise zum Aufladen eines elektrisch angetriebenen Fahrzeugs Verwendung finden. In diesem Fall ist ein Kabel einerseits an eine Ladestation angeschlossen und trägt andererseits ein Steckverbinderteil in Form eines Ladesteckers, der in ein zugeordnetes Gegensteckverbinderteil in Form einer Ladebuchse an einem Fahrzeug eingesteckt werden kann, um auf diese Weise eine elektrische Verbindung zwischen der Ladestation und dem Fahrzeug herzustellen. Andere Verwendungsmöglichkeiten von Hochstromkontakten ergeben sich bei einer Vielzahl von weiteren Hochstromanwendungen, wie beispielsweise zum Betrieb eines Hochstrom-Haushaltsgerätes oder zur Energieversorgung eines Schweißgerätes, Kompressors, Durchlauferhitzers etc..

Versorgungs- und Ladeströme können grundsätzlich als Gleichströme oder als Wechselströme übertragen werden, wobei insbesondere Ladeströme und Hochstrombereiche in Form von Gleichstrom eine große Stromstärke, beispielsweise größer als 200 A oder sogar größer als 300 A oder gar 350 A, aufweisen und zu einer Erwärmung des Kabels genauso wie eines mit dem Kabel verbundenen Hochstromkontaktes führen können.

Um batterieelektrisch angetriebene Lastkraftwagen schnell und effizient aufladen zu können sind in der Regel noch höhere elektrische Ladeleistungen erforderlich. Ein sogenanntes Megawatt Charging System Standard (Abkürzung MCS) soll als Schnellladesystem in der Zukunft Anwendung finden und soll eine Ladeleistung von bis zu 3,75 Megawatt ermöglichen, wobei die Spannung bis zu 1.250 V und der Ladestrom bis zu 3.000 A aufweisen kann.

Unabhängig von der Spezifikation des Ladesteckers oder der Ladesteckerdose (beispielsweise nach der Norm IEC 62196-2 oder IEC 62196-3 oder CHAdeMO-Standard oder nach dem Megawatt Charging System Standard) ist es insbesondere bei höheren und hohen Ladeleistungen ganz besonders wichtig, dass Ladestecker und/oder Ladesteckerdosen sehr sorgfältig und zuverlässig abgedichtet sind.

Um das Eindringen von Feuchtigkeit, Wasser oder anderen stromleitenden Flüssigkeiten zu verhindern, werden Ladesteckergehäuse von Ladesteckern beziehungsweise Ladesteckerdosengehäuse häufig abgedichtet, das heißt es werden Dichtungen an den Elementen verwendet, die in das Ladesteckergehäuse hinein und/oder hinausgeführt werden. Auch die Steckverbindung zueinander, das heißt die Ladesteckerpistole und die Ladebuchse des Fahrzeugs sind in gestecktem Zustand zueinander abgedichtet. Neben den eigentlichen Stromzuleitungskabeln und Kontaktelementen werden häufig auch Sensorleitungen in die Steckergehäuse hinein und/oder hinausgeführt, weil im Inneren von Ladesteckern und Ladesteckerdosen Sensoren zur Messung verschiedener physikalischer Größen eingebracht sind.

Das Gebrauchsmuster DE 20 2016 102 392 U1 beschreibt eine Lösung von Kabeldurchführungen in Ladesteckern in Form einer gedichteten Umspritz-Adapterhülse, aufweisend ein endseitiges Gewinde, um mit einem Gegengewinde des Steckverbindergehäuse verbunden zu werden und die Umspritz-Adapterhülse einen innen verlaufenden Kanal zur Durchführung eines Kabels aufweist, wobei ferner an dem Außenmantel der Umspritz-Adapterhülse mehrere Rippen und/oder Nuten vorgesehen sind und der Bereich mit den Rippen und/oder Nuten zur gemeinsamen Umspritzung mit einem Kunststoff in einem Umspritzwerkzeug mit einem Kabel ausgebildet ist.

Diese im Stand der Technik verfügbare Lösung weist jedoch neben der aufwändigen Konstruktion und der Notwendigkeit einer Kunststoffumspritzung den Nachteil auf, dass die Kabelführung innerhalb des Steckverbindergehäuses eine längere Strecke aufweist, wenn die Sensoren in der wünschenswerten Steckkontaktnähe positioniert sind.

Es ist Aufgabe der Erfindung, eine Sensoranordnung mit Kabelführung und abgedichteter Kabeldurchführung in einem Ladestecker weiterzuentwickeln und die Nachteile bekannter Lösungen zumindest teilweise zu verringern.

Zur Lösung der Aufgabe schlägt die Erfindung eine Sensoranordnung unmittelbar benachbart zu den Kontaktelementen des Ladesteckers vor, sodass die Sensoren in Steckrichtung im vorderen Bereich platziert sind. Aufgrund dieser Positionierung ist es erforderlich, dass die jeweilige Sensorverkabelung durch das Innere des Ladesteckers geführt wird, wobei die Kabelführung durch das Einlegeteil erfolgen muss.

Die Positionierung der Sensoren zur Messung von Temperatur und Spannung unmittelbar benachbart zu den Kontaktelementen des Ladesteckers ist besonders vorteilhaft für die Messdatenerfassung und Messgenauigkeit.

Die Erfindung erkennt, dass insbesondere bei Ladesteckern zur Übertragung hoher elektrischer Leistungen die Abdichtung der Kabeldurchführungen sehr zuverlässig hermetisch dicht erfolgen muss, um ein Eindringen von Wasser zu unterbinden. Bei fehlendem Steckgesicht darf kein Wasser durch das Einlegeteil hindurchkommen.

Um die Dichtheitsanforderungen der Kabeldurchführung sicherzustellen sieht die Erfindung ein Dichtungselement vor, dass wenigstens zwei Sensorkabel führt und abdichtet. Die Abdichtung der wenigstens zwei Sensorkabel erfolgt einzeln im Sinn einer jeweiligen Einzelabdichtung, das heißt innerhalb des Dichtungselementes ist für jedes abzudichtende Sensorkabel eine dichtende und durchführende Aufnahmebohrung vorgesehen.

Das vorzugsweise aus einem Silikonwerkstoff bestehende Dichtungselement weist im Wesentlichen eine äußere Querschnittkontur vergleichbar eines regelmäßigen Ovals auf, mit in Längsrichtung sich verändernden Querschnittsflächen.

Das Dichtungselement teilt sich in Längserstreckungsrichtung funktional in zwei Bereiche auf, den Abdichtungsbereich und den Positionssicherungsbereich. Der Abdichtungsbereich weist wenigstens zwei Dichtlippen auf, um die Kabeldurchführung des Dichtungselementes gegenüber dem Ladesteckergehäuse abzudichten. Der Positionssicherungsbereich an der zum Abdichtungsbereich gegenüberliegenden Längserstreckung des Dichtelementes weist einen zum Abdichtungsbereich verkleinerten Querschnitt auf und verfügt über eine umlaufende Erhöhung zur Positionshalterung des Dichtelementes.

Die Erfindung wird im Folgenden anhand eines exemplarischen Ausführungsbeispiels in Verbindung mit den Figuren näher erläutert. Dabei zeigen:
- Fig. 1: eine Seitenansicht des Ladesteckers mit Dichtungselementen auf der Steckseite;
- Fig. 2: eine Seitenansicht des Ladesteckers mit Dichtungselementen auf der Steckrückseite;
- Fig. 3: die dreidimensionale Ansicht auf das Dichtungselement;
- Fig. 4: die Darstellung des Dichtungselementes in drei Ansichten.

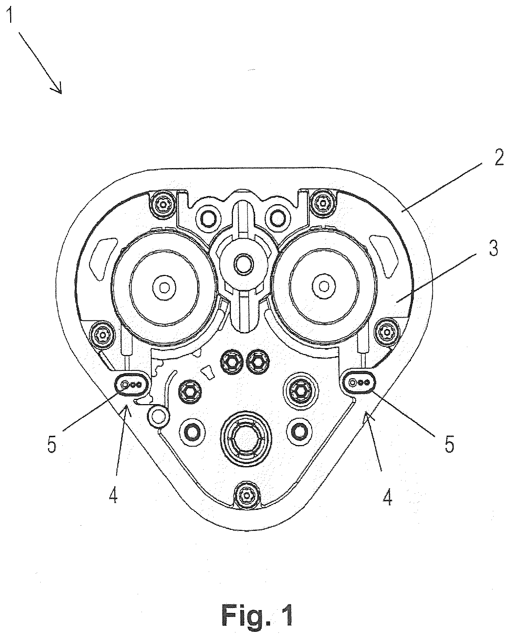

Figur 1 zeigt eine Seitenansicht des Ladesteckers 1 mit Dichtungselementen 5 auf der Steckseite, das heißt auf der Seite des Ladesteckers 1, der bei der Kontaktierungsbewegung hinein in die Ladesteckerdose zuerst kontaktiert.

Innenseitig des Ladesteckergehäuses 2 ist das Einlegeteil 3 aufgenommen und in einem sich nach innen erstreckenden Vorsprung ist wenigstens eine Kabeldurchführung 4 ausgebildet, in die ein Dichtungselement 5 eingesetzt ist. In Abhängigkeit der Verkabelungsanzahl der Sensoren sind in diesem Ausführungsbeispiel zwei Kabeldurchführungen 4 mit jeweils einem Dichtungselement 5 vorgesehen. In dieser Ansicht sind die Dichtungselemente 5 stirnseitig von ihrer Seite des Abdichtungsbereiches 7 zu sehen.

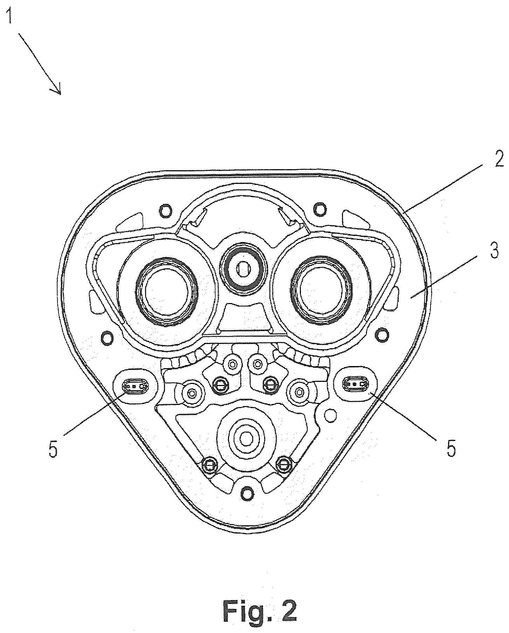

Figur 2 zeigt eine Seitenansicht des Ladesteckers 1 mit Dichtungselementen 5 auf der Steckrichtung abgewandten Seite. In dieser Ansicht sind die Dichtungselemente 5 stirnseitig von ihrer Seite des Positionssicherungsbereiches 9 zu sehen.

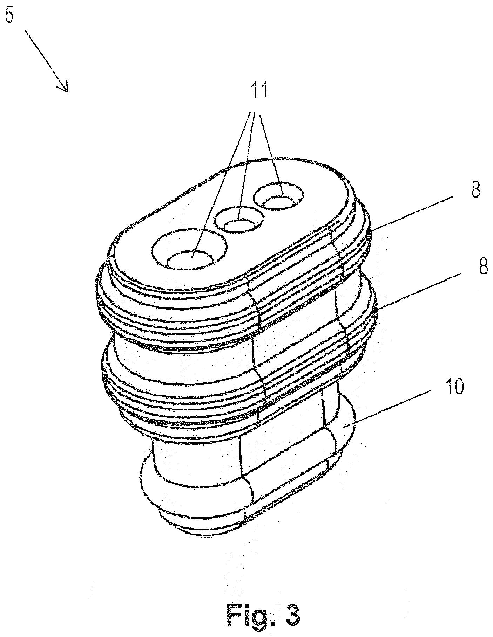

Figur 3 zeigt die dreidimensionale Ansicht auf das Dichtungselement 5. Vorgesehen sind eine erste Aufnahmebohrung 11 und wenigstens eine zweite Aufnahmebohrung 11, welche als Durchgangsbohrungen ausgestaltet sind.

Die Aufnahmebohrungen 11 dienen dazu, die Sensorkabel in abdichtender Weise durch das Dichtungselement 5 axial in Richtung der Längserstreckung des Dichtungselementes 5 und weitgehend parallel zur Längsmittenachse hindurchzuführen. Die Abdichtungsfunktion wird erreicht dadurch, dass die jeweilige Bohrungsinnenfläche der Aufnahmebohrung 11 an dem durchgeführten Sensorkabel klemmend und abdichtend anliegt.

Da die Abdichtungsfunktion des Dichtungselementes 5 gegenüber den Sensorkabeln als Einzeladerabdichtung konstruiert ist, wird in dem Dichtungselement 5 für jedes durchzuführende Sensorkabel eine Aufnahmebohrung 11 vorgesehen. Im gezeigten Ausführungsbeispiel ist das Dichtungselement 5 für den Einsatz in einem Ladestecker mit zwei Temperatursensoren und einem Spannungssensor konzipiert. Da jeder dieser Sensoren zwei Sensorkabel aufweist sind zwei Dichtungselemente 5 mit jeweils drei Aufnahmebohrungen 11 versehen. Je nach Außendurchmesser der durchzuführenden Sensorkabel sind die Aufnahmebohrungen 11 hinsichtlich ihrer Bohrungsdurchmesser darauf angepasst. Das Ausführungsbeispiel der Figur 3 zeigt einen größeren Innendurchmesser der Aufnahmebohrung 11 für das Spannungssensorkabel und zwei dem gegenüber kleinere Innendurchmesser für die Temperatursensorenkabel. Zur leichtern Einführung der Sensorkabel in die Aufnahmebohrungen 11 können die Aufnahmebohrungen eine Einfädelschräge aufweisen.

Die äußere Kontur des Dichtungselementes 5 in den Schnittebenen quer zur Längsmittenachse ist oval-förmig, in dem in Figur 3 gezeigten Ausführungsbeispiel wurde die Form des regelmäßigen Ovals 6 gewählt. Die ovale Querschnittsfläche optimiert die Möglichkeit, eine erste und wenigstens eine zweite Aufnahmebohrung 11 innerhalb des Dichtungselementes 5 als Einzeladerabdichtung zu positionieren.

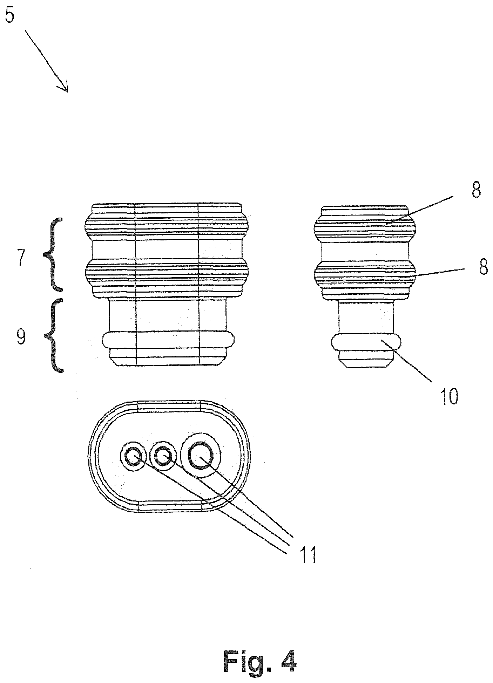

Figur 4 zeigt die Darstellung des Dichtungselementes 5 in drei Ansichten. In seiner Längserstreckung und damit in Richtung der Aufnahmebohrungen 11 des Dichtungselementes 5 befinden sich ein Abdichtungsbereich 7 und ein Positionssicherungsbereich 9.

Der Abdichtungsbereich 7 weist einer erste Dichtlippe 8 und wenigstens eine zweite Dichtlippe 8 auf, um die Kabeldurchführung 4 des Dichtungselementes 5 gegenüber dem Ladesteckergehäuse 2 abzudichten. Die Verwendung von wenigstens zwei Dichtlippen 8 erzielt eine besonders zuverlässig Abdichtungswirkung.

Der Positionssicherungsbereich 9 des Dichtungselementes 5 verfügt im endseitigen Abschnitt und gegenüber des Abdichtungsbereiches 7 über wenigstens eine umlaufende Erhöhung 10. Gleichzeitig ist die Querschnittsfläche des Positionssicherungsbereiches 9 vorzugsweise kleiner als die Querschnittsfläche des Abdichtungsbereiches 7 betrachtet auf axialer Höhe der Dichtlippen 8 und der umlaufenden Erhöhung 10. Auf dieses Weise verfügt der Positionssicherungsbereich 9 über relativ zum Abdichtungsbereich gesteigerte Verformungsfähigkeit, die es erlaubt, in elastischer Weise die Position des Dichtungselementes 5 in der Kabeldurchführung 4 zu haltern.

### Bezugszeichenliste

- 1: Ladestecker
- 2: Ladesteckergehäuse
- 3: Einlegeteil
- 4: Kabeldurchführung
- 5: Dichtungselement
- 6: regelmäßiges Oval
- 7: Abdichtungsbereich
- 8: Dichtlippe
- 9: Positionssicherungsbereich
- 10: umlaufende Erhöhung
- 11: Aufnahmebohrung

## Patentansprüche

1. Ladestecker (1) mit Kontaktelementen zur lösbaren, elektrisch leitenden Verbindung eines batterieelektrischen Fahrzeugs mit einer Ladestation, aufweisend ein Ladesteckergehäuse (2) mit wenigstens einer Kabeldurchführung (4), **dadurch gekennzeichnet, dass** wenigstens ein Sensor benachbart zu den Kontaktelementen und in Steckrichtung im vorderen Bereich des Ladesteckers (1) angeordnet ist, wobei die Sensorkabel durch die Kabeldurchführung (4) hindurchgeführt und mit wenigstens einem Dichtungselement (5) gegenüber dem Ladesteckergehäuse (2) abgedichtet sind.

2. Ladestecker (1) gemäß Anspruch 1, **dadurch gekennzeichnet, dass** die äußere Kontur des Dichtungselementes (5) in den Schnittebenen quer zur Längsmittenachse oval-förmig ist.

3. Ladestecker (1) gemäß Anspruch 1, **dadurch gekennzeichnet, dass** das Dichtungselement (5) in Längsrichtung eine erste und wenigstens eine zweite Aufnahmebohrung (11) zur Durchführung von Sensorkabeln durch die Kabeldurchführung (4) aufweist.

4. Ladestecker (1) gemäß Anspruch 3, **dadurch gekennzeichnet, dass** die Aufnahmebohrungen (11) als Einzeladerabdichtungen ausgebildet sind.

5. Ladestecker (1) gemäß Anspruch 3, **dadurch gekennzeichnet, dass** die Aufnahmebohrungen (11) jeweils eine Einfädelschräge aufweisen.

6. Ladestecker (1) gemäß Anspruch 1, **dadurch gekennzeichnet, dass** das Dichtungselement (5) einen Abdichtungsbereich (7) und einen Positionssicherungsbereich (9) aufweist.

7. Ladestecker (1) gemäß Anspruch 6, **dadurch gekennzeichnet, dass** im Abdichtungsbereich (7) eine erste Dichtlippe (8) und wenigstens eine zweite Dichtlippe (8) angeordnet sind.

8. Ladestecker (1) gemäß Anspruch 6, **dadurch gekennzeichnet, dass** im Positionssicherungsbereich (9) wenigstens eine umlaufende Erhöhung (10) angeordnet ist.

9. Ladestecker (1) gemäß Anspruch 1, **dadurch gekennzeichnet, dass** der wenigstens eine Sensor zwei Temperatursensoren und einen Spannungssensor umfasst und das Ladesteckergehäuse (2) zwei Kabeldurchführungen (4) mit jeweils einem Dichtungselement (5) aufweist.

10. Ladestecker (1) gemäß Anspruch 9, **dadurch gekennzeichnet, dass** das Dichtungselement (5) drei Aufnahmebohrungen (11) zur Durchführung von Sensorkabeln durch die Kabeldurchführung (4) aufweist.
